**Europäisches Patentamt**

**European Patent Office**

**Office européen des brevets**

(11) Numéro de publication : **0 349 438 B1**

(12)

# FASCICULE DE BREVET EUROPEEN

(45) Date de publication du fascicule du brevet :
**20.05.92 Bulletin 92/21**

(51) Int. Cl.⁵ : **G01D 15/16**

(21) Numéro de dépôt : **89401877.9**

(22) Date de dépôt : **29.06.89**

(54) **Procédé et dispositif d'identification d'outil d'écriture.**

(30) Priorité : **30.06.88 FR 8808803**

(43) Date de publication de la demande :
**03.01.90 Bulletin 90/01**

(45) Mention de la délivrance du brevet :
**20.05.92 Bulletin 92/21**

(84) Etats contractants désignés :
**AT BE DE ES FR GB IT LU NL**

(56) Documents cités :
**FR-A- 2 572 572**
**US-A- 4 274 102**
**PATENT ABSTRACTS OF JAPAN, vol. 12, no.
36 (M-664)[2883], 3 février 1988, page 97 M 664;
& JP-A-62 188 653 (MITSUBISHIHEAVY IND.
LTD) 18-08-1987**

(73) Titulaire : **Océ Graphics France S.A.
1, Rue Jean Lemoine B.P. 113
F-94003 Créteil Cedex (FR)**

(72) Inventeur : **Gascuel, Yves J.
15, Chemin des Justices
F-91370 Verrières Le Buisson (FR)**
Inventeur : **Cointre, Jean-Pierre
46, avenue Ardouin
F-94420 Le Plessis Trevise (FR)**

(74) Mandataire : **Hanneman, Henri W.A.M. et al
Océ-Nederland B.V. Patents and Information
Postbus 101
NL-5900 MA Venlo (NL)**

Jouve, 18, rue Saint-Denis, 75001 PARIS

**Description**

L'invention se rapporte aux machines graphiques du type traceur et plus particulièrement à un procédé et dispositif d'identification d'outil d'écriture pour de telles machines graphiques.

Les machines graphiques du type traceur comprennent d'une façon générale une tête d'écriture portant un outil d'écriture déplaçable sur un support d'impression pour tracer sur ce support des motifs graphiques. Dans les traceurs "à plat" le support d'impression est immobile et la tête d'écriture peut se déplacer sur ce support selon deux axes rectangulaires. Dans d'autres traceurs, le support d'impression est mobile dans une direction X et la tête d'écriture est mobile dans une direction Y perpendiculaire à la direction X. L'outil d'écriture est en outre déplaçable dans une direction Z perpendiculaire au support d'impression entre une position de travail au contact du support d'impression et une position écartée de ce support. L'outil d'écriture utilisé est sélectionné parmi un ensemble d'outils stockés sur un organe de stockage comme par exemple un barillet, plusieurs outils d'écriture, par exemple de couleurs ou d'épaisseurs de trait différentes étant généralement utilisés pour un même dessin.

Il est important de connaître à tout moment l'outil d'écriture monté sur la tête. D'une part, il est nécessaire de modifier les paramètres d'écriture tels que vitesse, accélération ou force d'appui suivant le type d'outil d'écriture, par exemple pointe fibre, pointe bille ou pointe tubulaire ; d'autre part il peut être utile de vérifier si l'outil d'écriture porté par la tête correspond bien à celui que l'on désire utiliser.

Un procédé d'identification connu consiste à repérer les différents outils d'écriture suivant la position qu'ils occupent sur le dispositif de stockage, le type d'outil étant mis en mémoire par l'opérateur dans la machine lorsque les différents outils sont mis en place sur le dispositif de stockage. Dans un autre procédé connu d'identification, on place des repères optiques sur les outils d'écriture comme par exemple, des bandes annulaires réfléchissantes dont la largeur et la disposition dépendent du type d'outil. En détectant la largeur et la disposition de ces bandes au moyen d'un émetteur-récepteur optique, on peut déterminer le type de l'outil pris par la tête d'écriture. Ce système a l'inconvénient d'être sensible à la lumière ambiante et aux poussières susceptibles de venir obscurcir les bandes réfléchissantes. Les bandes réfléchissantes peuvent être endommagées au cours des changements d'outils et le système nécessite un équipement de détection spécifique dont le réglage peut être délicat. Dans d'autres systèmes, l'identification du type d'outil d'écriture s'effectue par identification du barillet, ce qui interdit le mélange de plusieurs outils de types différents sur un même barillet.

L'objet de l'invention est un procédé et un dispositif de détection automatique du type d'outil d'écriture qui ne présente pas les inconvénients ci-dessus. Un avantage supplémentaire de l'invention est de ne pas nécessiter de dispositif de détection autre que le détecteur de position habituellement utilisé pour indiquer la position de l'outil d'écriture par rapport à la tête d'écriture, ce détecteur servant à contrôler la descente de l'outil sur le support d'impression.

Selon l'invention comme définie dans la revendication 1, un procédé d'identification d'outil d'écriture dans une machine graphique comprenant une tête d'écriture déplaçable au moins dans une première direction (Y) parallèle à un support d'impression pour tracer sur le support d'impression des motifs graphiques prédéterminés, l'outil d'écriture porté par la tête d'écriture pouvant en outre être déplacé selon une deuxième direction (Z) sensiblement perpendiculaire à la première de façon à s'éloigner ou se rapprocher du support d'impression, est caractérisé en ce que, l'une des première et deuxième directions étant choisie comme direction de détection, l'outil d'écriture comporte une surface d'identification dont l'emplacement selon la direction de détection est déterminé en fonction du type de l'outil d'écriture. De plus, le procédé comprend les étapes suivantes : amener l'outil d'écriture jusqu'à une position d'identification pour laquelle la surface d'identification de l'outil d'écriture est en contact avec une butée d'identification de la machine graphique ; et détecter la position d'identification de l'outil d'écriture selon ladite direction de détection afin d'en déduire une indication sur le type d'outil d'écriture porté par la tête.

De préférence, on réalise une mesure différentielle en amenant l'outil d'écriture jusqu'à une position de référence pour laquelle une surface de référence de l'outil d'écriture, dont l'emplacement est indépendant du type d'outil, est en contact avec une butée de référence de la machine graphique ; on détecte la position de référence selon ladite direction de détection ; et l'on combine la position d'identification et la position de référence pour en déduire une indication sur le type d'outil d'écriture.

Selon un autre aspect de l'invention comme définie dans la revendication 10, une machine graphique comprend une tête d'écriture montée mobile sur un bâti selon au moins une première direction (Y) et portant un outil d'écriture de façon à tracer sur un support d'impression des motifs graphiques prédéterminés ; des moyens de montage de l'outil d'écriture sur la tête d'écriture pour autoriser des mouvements de l'outil d'écriture par rapport à la tête d'écriture selon une deuxième direction (Z) sensiblement perpendiculaire à la première de façon à s'éloigner ou se rapprocher du support d'impression ; des premiers moyens d'actionnement pour déplacer la tête d'écriture selon la première direction (Y) ; et des deuxièmes moyens d'actionnement pour déplacer l'outil d'écriture par rapport à la tête d'écriture selon la deuxième direction (Z). L'une des première et deuxième directions étant choisie comme direction de détection, l'outil d'écriture comporte une surface d'identification dont l'emplacement selon ladite direction de détection est déterminé en fonction du type de l'outil d'écriture et la machine graphique comprend une butée d'identification, des moyens pour commander les moyens d'actionnement afin d'amener la tête d'écriture dans une position d'identification pour laquelle la surface d'identification est en contact avec la butée d'identification et des moyens pour détecter la position de l'outil d'écriture selon la direction de détection afin de déduire de la position détectée une indication sur le type d'outil d'écriture porté par la tête.

Les caractéristiques et avantages de l'invention ressortiront d'ailleurs mieux de la description qui va suivre, donnée à titre d'exemple non limitatif en référence aux dessins annexés dans lesquels :

– la figure 1 est une vue générale très schématique d'une machine graphique du type traceur XY ;

– la figure 2 est une vue plus détaillée montrant la tête d'écriture de la machine graphique de la figure 1 ; et

– les figures 3a et 3b sont des vues partielles de détail montrant l'outil d'écriture dans plusieurs positions utilisées dans le procédé d'identification suivant l'invention.

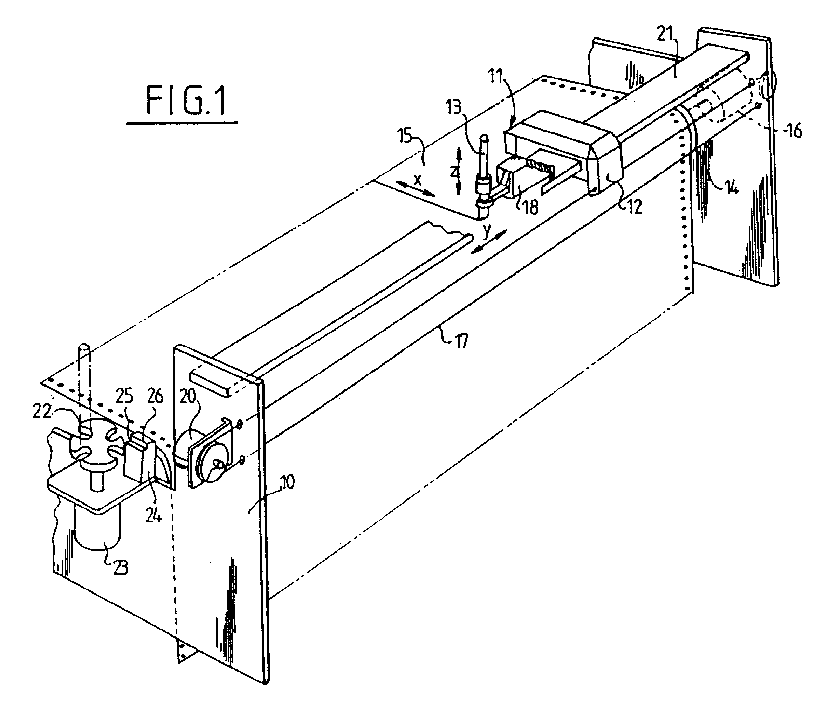

La figure 1 montre schématiquement une partie d'une machine à dessiner comportant un bâti 10 sur lequel est montée mobile une tête d'écriture 11 formée par un chariot 12 portant, par l'intermédiaire de moyens de montage 18, un outil d'écriture 13. Un tambour 14 sur lequel passe un support d'impression tel qu'une feuille de papier 15 est monté tournant sur le bâti 10.

Le tambour 14 est entraîné en rotation au moyen d'un moteur 16 dont l'arbre de sortie est par exemple couplé directement à l'axe du tambour 14. La rotation du tambour dans un sens ou dans l'autre provoque le déplacement longitudinal de la feuille 15 vers l'avant ou vers l'arrière suivant une direction X. La solidarisation entre le tambour 14 et la feuille 15 est réalisée par exemple au moyen de picots portés par le tambour et coopérant avec des perforations formées le long des bords de la feuille ou au moyen de galets presseurs appliquant la feuille sur le tambour.

La tête d'écriture 11 est mobile en translation suivant une direction horizontale transversale Y, parallèle à l'axe du tambour 14 et perpendiculaire à la direction X. A cet effet, le chariot 12 est par exemple solidaire d'un ruban, ou câble 17 entraîné dans un sens ou dans l'autre par un moteur 20. Pendant son déplacement, le chariot 12 est guidé le long d'une ou plusieurs glissières 21.

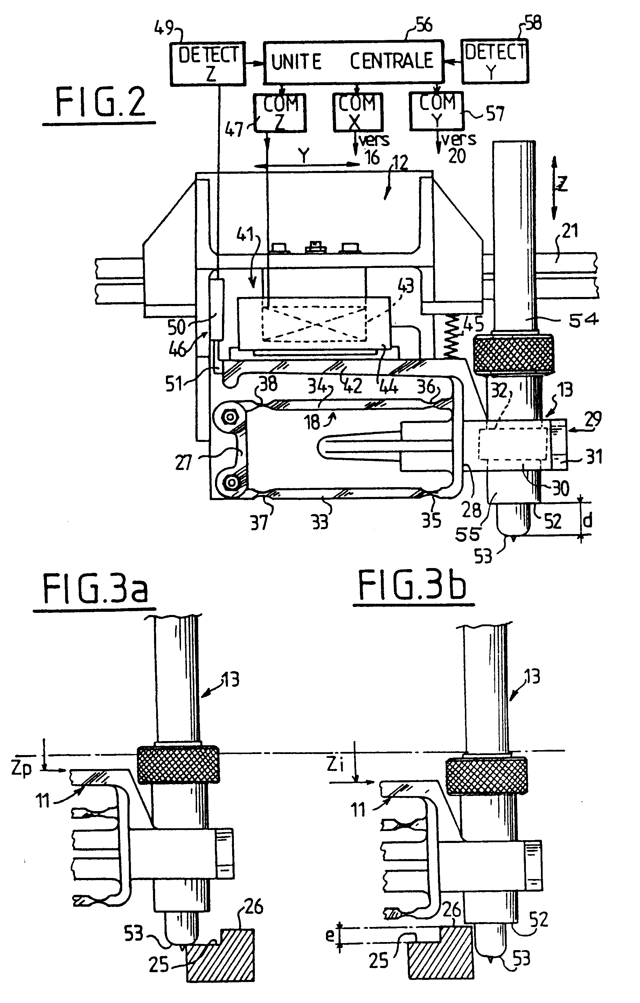

L'outil d'écriture 13 est monté mobile sur le chariot 12 dans une direction Z perpendiculaire à X et Y entre une position rapprochée de la feuille 15 (position basse) dans laquelle la pointe de l'outil d'écriture est en contact avec la feuille 15, et une position éloignée (position haute) dans laquelle la pointe de l'outil d'écriture n'est pas en contact avec la feuille 15. En position basse, l'outil d'écriture est en contact avec la feuille 15 dans une zone d'écriture située parallèlement et à proximité de la génératrice supérieure du tambour 14 ou le long de cette génératrice. Différents moyens d'actionnement peuvent être utilisés pour faire passer l'outil d'écriture de sa position haute à sa position basse, ou inversement. Un mode particulier de réalisation de ces moyens d'actionnement est décrit plus loin en référence à la figure 2.

Enfin, sur la figure 1, est également représenté de façon très schématique un magasin rotatif ou barillet 22 à la périphérie duquel sont formés plusieurs logements pour le stockage d'outils d'écriture, afin de permettre un changement automatique de l'outil d'écriture porté par la tête. Le changement est effectué en amenant la tête d'écriture 11 dans une position de transfert adjacente au barillet 22, cette position correspondant à une extrémité de la course de la tête d'écriture. Le barillet 22 est mobile en rotation sous l'action d'un moteur 23 pour présenter, face à la tête d'écriture en position de transfert, soit un logement libre devant recevoir l'outil porté par la tête, soit un logement occupé par un outil à transférer sur la tête.

A proximité du barillet 22, sur le bâti de la machine, et dans le prolongement du chemin d'écriture, est fixée une pièce 24 ayant à sa partie supérieure une surface de butée de référence 25 et une surface de butée d'identification 26 au contact desquelles on peut amener l'outil d'écriture 13. La fonction de ces butées sera expliquée plus en détail par la suite.

La tête d'écriture 11 portant un outil d'écriture 13 est illustrée de façon plus détaillée sur la figure 2.

Les moyens de montage 18 comprennent une partie arrière 27 fixée sur le chariot 12 et une partie avant 28 adaptée à recevoir l'outil d'écriture et montée mobile dans la direction Z par rapport au chariot 12. L'outil d'écriture 13 est maintenu sur la partie avant 28 des moyens de montage par l'intermédiaire d'une pince 29 fixée à cette partie. La pince 29 comprend une mâchoire fixe 30 solidaire de la partie avant 28 des moyens de montage 18 et une mâchoire 31 articulée sur cette partie avant autour d'un axe vertical et repoussée par un ressort (non représenté) pour enserrer l'outil d'écriture 13 de part et d'autre d'une collerette 32 réalisée sur cet outil d'écriture afin de maintenir fermement ce dernier pendant toutes les opérations d'écriture. Les moyens de montage 18 comprennent également des bras de liaison 33 et 34 fixés à la partie avant 26 par des amincissements 35 et 36 et à la partie arrière par des amincissements 37 et 38.

Dans l'exemple illustré, les mouvements d'abaissement et de relèvement de l'outil d'écriture selon la direction Z sont réalisés par déformation réversible des moyens de montage 18, comme décrit dans la demande de brevet français n° 87.05116. En bref, les parties 27 et 28 et les bras de liaison 33 et 34 sont réalisés en une seule pièce, par exemple par moulage d'une matière plastique telle qu'un polypropylène, sous forme d'un parallélogramme élastiquement déformable. La capacité de déformation de cet ensemble est obtenue grâce aux amincissements 35 à 38 des bras de liaison 33, 34 qui relient la partie avant 28 portant la pince 29 à la partie arrière 27 fixée rigidement au chariot 12.

Les mouvements d'abaissement et de relèvement de l'outil d'écriture 13 sont provoqués par un actionneur 41 agissant directement sur un bras 42 solidaire de la partie avant 28 des moyens de montage 18. L'actionneur 41 est par exemple du type électromagnétique avec un ensemble 43 porté par le chariot 12 et formé d'une pièce plane en fer doux sur laquelle sont fixés deux aimants permanents, et une bobine 44 mobile verticalement dans le champ créé par l'ensemble 43 en réponse à l'établissement dans la bobine d'un courant provenant d'une commande 47. Selon le sens du courant qui la parcourt, la bobine 44, qui est solidaire du bras 42, est déplacée vers le bas pour déformer les moyens de montage afin d'amener l'outil d'écriture 13 en position abaissée, ou vers le haut afin d'amener l'outil d'écriture en position relevée. Un ressort de traction 45 exerce une force de rappel sur la partie avant 28 des moyens de montage pour ramener l'outil d'écriture en position relevée lorsque la machine n'est pas sous tension. Dans la mesure où le ressort 45 est choisi pour juste équilibrer le poids de l'ensemble mobile portant l'outil, afin de ne pas agir en cours d'écriture, il est préférable d'utiliser l'actionneur 41 sous l'effet de la commande 47 pour ramener l'outil en position relevée, ceci afin d'assurer un relevage rapide et précis de l'outil.

La tête d'écriture 11 comprend de plus un capteur de position 46 pour détecter la position de l'outil d'écriture 13 dans la direction Z. Ce capteur qui comprend une partie fixe 50 solidaire du chariot 12 et une partie mobile 51 solidaire du bras 42, peut être un codeur optique comportant une piste codée fixée à la partie mobile 51 et dont la position dans la direction Z est fournie sous forme d'un signal électrique par un détecteur optique contenu dans la partie fixe 50 grâce à un circuit de détection 49.

Les circuits de commande 47 et de détection 49 sont reliés à une unité centrale à microprocesseur 56 programmée pour leur gestion. L'unité centrale 56 est aussi reliée à une commande 57 reliée au moteur 20 (figure 1) pour commander l'entraînement selon la direction Y. Ce moteur 20 est, par exemple, un moteur à courant continu associé à un codeur (non représenté) monté sur la poulie d'entraînement du câble 17. La position selon Y du chariot est ainsi détectée et envoyée, sous forme de signal électrique, à l'unité centrale par l'intermédiaire d'un circuit de détection 58. L'unité centrale est connectée de la même façon à une commande 60 reliée au moteur 16 pour commander l'entraînement du support d'impression selon la direction X.

Bien entendu, d'autres modes de réalisation de la tête d'écriture peuvent être adoptés pourvu qu'ils permettent des déplacements de l'outil d'écriture dans la direction Y et dans la direction Z. Un autre mode de réalisation de tête d'écriture est par exemple décrit dans le brevet français n° 2572572 (BENSON). Dans d'autres têtes d'écriture, l'outil d'écriture est fixé à l'extrémité d'un support pivotant autour d'un axe horizontal de façon que le déplacement selon la direction Z s'effectue en suivant un arc de cercle voisin de la verticale.

En vue de l'identification du type d'outil, l'outil d'écriture 13 comprend un épaulement ayant une surface d'identification 52 dont l'emplacement selon la direction Z, dépend du type d'outil. En d'autres termes, la distance entre la surface d'identification 52 et la collerette 32 est différente pour des types d'outils différents. L'outil d'écriture 13 présente aussi une surface de référence 53 située par exemple à proximité de la pointe de l'outil d'écriture. L'emplacement de la surface de référence selon la direction Z est fixé avec précision par rapport à la collerette 32 quel que soit l'outil d'écriture utilisé. Dans l'exemple décrit, l'outil d'écriture est formé de deux parties : le dispositif d'écriture proprement dit 54 et un porte-outil 55. L'appareil d'écriture est placé dans le porte-outil et maintenu dans son logement grâce à une bague moletée qui a pour effet de serrer la partie supérieure fendue de ce porte-outil autour de l'appareil d'écriture. Dans cet exemple, c'est le porte-outil qui est équipé des surfaces 52 et 53 et de la collerette 32. Bien entendu, le porte-outil peut être partie intégrante de l'appareil d'écriture, le corps de l'appareil d'écriture étant fabriqué par moulage avec les épaulements et la collerette convenables.

Pour identifier le type d'outil porté par la tête, on procède comme décrit ci-après. Comme on l'a vu précédemment pour chaque type d'outil, la surface 52 est située à une distance différente de la collerette 32. L'outil d'écriture étant en position haute, on déplace la tête d'écriture 11 selon la direction Y jusqu'à ce que la surface d'identification 52 se trouve en face de la butée d'identification 26. On descend l'outil d'écriture 13 au moyen du dispositif d'actionnement 41 jusqu'à ce que la surface 52 soit au contact de la butée 26 (figure 3b), cette position étant appelée position d'identification. On mesure alors cette position d'identification Zi selon la direction Z. La position Zi est représentative du type d'outil d'écriture. Pour plus de sûreté, on utilise une mesure différentielle. Pour ce faire, on déplace à nouveau la tête d'écriture jusqu'à ce que la surface de référence 53 soit en face de la butée de référence 25. On descend ensuite l'outil d'écriture 13 selon la direction Z jusqu'à ce que cette surface 53 soit au contact de la butée de référence 25 dans la position de référence représentée sur la figure 3a. On mesure alors cette position de référence Zr selon l'axe Z au moyen du détecteur 46 et l'on calcule la différence (Zi-Zr). Ce calcul est effectué dans l'unité centrale 56 après mise en mémoire des valeurs Zi et Zr. En appelant <u>d</u> la distance entre les surfaces 52 et 53 et <u>e</u> la distance entre les butées 25 et 26, on voit que :

$$Zi - Zr = d - e$$

En réalisant les deux butées 25 et 26 sur la même pièce, la distance <u>e</u> est définie avec précision et Zi - Zr donne une mesure précise de <u>d</u>. On peut ainsi identifier un nombre important de types d'outils avec une course relativement réduite. Dans une machine à dessiner de type classique, on a ainsi pu détecter 7 types d'outils différents avec une course de 3,5 mm.

La détection de la position de référence, sert aussi de détection de présence, permettant de vérifier qu'après un changement d'outil, le nouvel outil d'écriture a été saisi par la tête et saisi dans la bonne position. Pour ce faire, on vérifie dans l'unite centrale 56 que la position de référence Zr se trouve entre des limites prédéterminées.

Dans l'exemple décrit, on a représenté les butées fixées sur le bâti à proximité du barillet. Ces butées peuvent évidemment être placées en d'autres endroits accessibles par la tête d'écriture. Ces butées pourraient par exemple être disposées sur le barillet lui-même. Dans la direction Z, on choisit de préférence l'emplacement de la surface de référence de façon que la position de référence soit voisine de la position haute, Zr étant par exemple voisin de 0,5 mm. L'emplacement de la butée d'identification selon l'axe Z est choisi de façon que, pour les différents types d'outils, la moyenne des positions Zi soit centrée approximativement au milieu de la course de l'outil d'écriture.

Le mode de réalisation décrit peut évidemment faire l'objet de nombreuses variantes sans sortir du cadre de l'invention comme définie dans les revendications. Par exemple, on peut prévoir des outils d'écriture dont une partie du corps a un diamètre fonction du type d'outil, la surface extérieure de cette partie du corps formant la surface d'identification. Au moyen d'un déplacement selon la direction Z, on amène alors cette partie du corps de l'outil en face d'une butée d'identification ayant une face d'appui verticale et l'on mesure, au moyen du détecteur Y, la position d'identification pour laquelle l'outil d'écriture est en contact avec la butée d'identification. Dans cette solution, les opérations selon la direction Y et celles selon la direction Z sont inversées, la direction Y devenant la direction de détection et la direction Z devenant la direction d'approche.

**Revendications**

1. Procédé d'identification d'outil d'écriture dans une machine graphique comprenant une tête d'écriture (11) déplaçable au moins dans une première direction (Y) parallèle à un support d'impression (15) pour tracer sur le support d'impression des motifs graphiques prédéterminés, l'outil d'écriture (13), porté par la tête d'écriture, pouvant en outre être déplacé selon une deuxième direction (Z) sensiblement perpendiculaire à la première de façon à s'éloigner ou se rapprocher du support d'impression, caractérisé en ce que :

l'une des première et deuxième directions étant choisie comme direction de détection, l'outil d'écriture (13) comporte une surface d'identification (52) située, selon la direction de détection, à un emplacement fonction du type de l'outil d'écriture, et en ce qu'il comprend les étapes suivantes :

amener l'outil d'écriture (13) jusqu'à une position d'identification pour laquelle la surface d'identification (52) est en contact avec une butée d'identification (26) de la machine graphique ; et

détecter la position d'identification (Zi) de l'outil d'écriture selon la direction de détection afin d'en déduire une indication sur le type d'outil porté par la tête.

2. Procédé selon la revendication 1, caractérisé en ce que la direction de détection est la deuxième direction (Z).

3. Procédé selon la revendication 1 ou 2, caractérisé en ce que l'étape consistant à amener l'outil d'écriture à la position d'identification comprend les opérations suivantes :

déplacer la tête d'écriture (11) selon l'autre desdites directions jusqu'à ce que la surface d'identification (52) se trouve en face, selon la direction de détection, de la butée d'identification (26) ; et

déplacer l'outil d'écriture (13) selon la direction de détection jusqu'à la position d'identification.

4. Procédé selon l'une des revendications 1 à 3, caractérisé en ce qu'il comprend de plus une étape consistant à déplacer l'outil d'écriture (13) selon la direction de détection pour écarter la surface d'identification (52) de la butée d'identification (26) après détection de la position d'identification (Zi).

5. Procédé selon l'une des revendications 1 à 4, caractérisé en ce que l'outil d'écriture (13) comporte une surface de référence (53) située, selon la direction de détection, à un emplacement fixe quel que soit le type de l'outil d'écriture et en ce qu'il comprend les étapes suivantes :

amener l'outil d'écriture (13) jusqu'à une position de référence pour laquelle la surface de référence (53) est en contact avec une butée de référence (25) de la machine graphique ;

détecter la position de référence (Zr) de l'outil d'écriture selon la direction de détection ; et

combiner la position d'identification (Zi) et la position de référence (Zr) pour en déduire une indication sur le type d'outil d'écriture.

6. Procédé selon la revendication 5, caractérisé en ce que l'étape consistant à amener l'outil à la position de référence comprend les opérations suivantes :

déplacer la tête d'écriture (11) selon l'autre desdites directions jusqu'à ce que la surface de référence (53) se trouve en face, selon la direction de détection, de la butée de référence (25) ; et

déplacer l'outil d'écriture (13) selon la direction de détection jusqu'à la position de référence.

7. Procédé selon l'une des revendications 5 et 6, caractérisé en ce qu'il comprend une étape consistant à déplacer l'outil d'écriture (13) selon la direction de détection pour écarter la surface de référence (53) de la butée de référence (25) après détection de la position de référence (Zr).

8. Procédé selon l'une des revendications 5 à 7, caractérisé en ce que ladite butée d'identification (26) et ladite butée de référence (25) sont réalisées sur une pièce unique (24).

9. Procédé selon l'une des revendications 5 à 8, caractérisé en ce que l'étape de combinaison de la position d'identification et la position de référence consiste à déterminer la différence entre les deux positions (Zi-Zr).

10. Machine graphique comprenant une tête d'écriture (11) portant un outil d'écriture (13), la tête d'écriture étant montée mobile sur un bâti (10) selon au moins une première direction (Y) de façon à tracer sur un support d'impression (15) des motifs graphiques prédéterminés ; l'outil d'écriture (13) étant monté mobile sur la tête d'écriture (11) selon une direction de détection perpendiculaire à la première entre une position éloignée et une position rapprochée par rapport au support d'impression (15) ; des premiers moyens d'actionnement (20) pour déplacer la tête d'écriture (11) selon la première direction (Y) ; des deuxièmes moyens d'actionnement (41) pour déplacer l'outil d'écriture par rapport à la tête d'écriture selon la deuxième direction (Z) ; caractérisé en ce que :

l'une des première et deuxième directions étant choisie comme direction de détection, l'outil d'écriture (13) comporte une surface d'identification (52) située, selon la direction de détection, à un emplacement fonction du type de l'outil d'écriture ; et la machine graphique comprend :

une butée d'identification (26) ;

des moyens (47, 57) pour commander les moyens d'actionnement (20, 41) afin d'amener l'outil d'écriture (13) dans une position d'identification (Zi) pour laquelle la surface d'identification (52) est en contact avec la butée d'identification (26) ; et

des moyens (46) pour détecter la position d'identification (Zi) selon la direction de détection afin d'en déduire une indication sur le type d'outil d'écriture porte par la tête (11).

11. Machine graphique selon la revendication 10, caractérisée en ce que la direction de détection est la deuxième direction (Z).

12. Machine graphique selon la revendication 10 ou 11 dans laquelle l'outil d'écriture (13) comporte une surface de référence (53) située, selon la direction de détection, à un emplacement indépendant du type de l'outil d'écriture ; caractérisée en ce qu'elle comprend de plus une butée de référence (25) ; les moyens de commande (47, 57) sont adaptés à commander les moyens d'actionnement (20, 41) pour amener l'outil d'écriture (13) dans une position de référence (Zr) pour laquelle la surface de référence (53) est en contact avec la butée de référence (25) ; les moyens de détection (46) sont adaptés à détecter la position de référence (Zr) ; et des moyens de comparaison sont prévus pour combiner les positions détectées de référence (Zr) et d'identification (Zi) pour en déduire une indication sur le type d'outil d'écriture.

13. Machine graphique selon la revendication 12, caractérisée en ce que la butée de référence (25) et la butée d'identification (26) sont réalisées sur une pièce unique (24).

14. Machine graphique selon la revendication 12 ou 13, comprenant un organe de stockage (22) sur lequel sont disposés des outils d'écriture de réserve amovibles, la tête d'écriture (11) étant adaptée à prendre ou déposer un outil d'écriture sur l'organe de stockage ; caractérisée en ce que la butée de référence (25) et la butée d'identification (26) sont réalisées sur ledit organe de stockage (22).

15. Machine graphique selon l'une des revendications 12 à 14, caractérisée en ce que l'emplacement de la butée de référence (25) est choisi, selon la deuxième direction (Z), de façon que la position de référence (Zr) soit voisine de la position de l'outil d'écriture la plus éloignée possible du support d'impression (15).

16. Machine graphique selon l'une des revendications 12 à 15, caractérisée en ce que l'emplacement de la butée d'identification (26) est choisi selon la deuxième direction (Z), de façon que la moyenne des positions d'identification pour les différents types d'outils d'écriture soit voisine du milieu entre la position éloignée et la position rapprochée de l'outil d'écriture (13) par rapport au support d'impression (15).

**Patentansprüche**

1. Verfahren zur Identifizierung eines Schreibgeräts in einer Zeichenmaschine mit einem Schreibkopf (11), der zumindest in eine erste Richtung (Y) parallel zu einem Druckträger (15) beweglich ist, um auf dem Druckträger vorbestimmte grafische Motive aufzuzeichnen, wobei das vom Schreibkopf getragene Schreibgerät (13) weiters in einer zweiten Richtung (Z) im wesentlichen senkrecht zur ersten Richtung beweglich ist, um sich vom Druckträger zu entfernen oder sich zu diesem hinzubewegen, dadurch gekennzeichnet, daß die erste oder die zweite Richtung als Erfassungsrichtung gewählt wird, wobei das Schreibgerät (13) eine Identifizierungsfläche (52) aufweist, die sich in der Erfassungsrichtung an einer Stelle befindet, die als Funktion der Art des Schreibgeräts bestimmt wird, und daß folgende Schritte ausgeführt werden:

Beförderung des Schreibgeräts (13) in eine Identifizierungsstellung, in der sich die Identifizierungsfläche (52) mit einem Identifizierungsanschlag (26) der Zeichenmaschine in Kontakt befindet, und

Ermittlung der Identifizierungsstellung (Zi) des Schreibgeräts in der Erfassungsrichtung, um aus dieser Stellung eine Angabe über die Art des vom Kopf getragenen Schreibgeräts zu erhalten.

2. Verfahren nach Anspruch 1, dadurch gekennzeichnet, daß die Erfassungsrichtung die zweite Richtung (Z) ist.

3. Verfahren nach Anspruch 1 oder 2, dadurch gekennzeichnet, daß der Schritt der Beförderung des Schreibgeräts in die Identifizierungsstellung folgende Arbeitsgänge umfaßt:

Bewegen des Schreibkopfes (11) in die andere der Richtungen, bis die Identifizierungsfläche (52) sich in der Erfassungsrichtung gegenüber dem Identifizierungsanschlag (26) befindet, und

Bewegen des Schreibgeräts (13) in der Erfassungsrichtung bis in die Identifizierungsstellung.

4. Verfahren nach einem der Ansprüche 1 bis 3, dadurch gekennzeichnet, daß in einem weiteren Schritt das Schreibgerät (13) in die Erfassungsrichtung bewegt wird, um die Identifizierungsfläche (52) vom Identifizierungsanschlag (26) zu entfernen, nachdem die Identifizierungsstellung (Zi) erfaßt wurde.

5. Verfahren nach einem der Ansprüche 1 bis 4, dadurch gekennzeichnet, daß das Schreibgerät (13) eine Bezugsfläche (53) aufweist, die sich in der Erfassungsrichtung unabhängig vom Schreibgerätetyp an einer festen Stelle befindet, und daß folgende Schritte vorgesehen sind:

Bewegen des Schreibgeräts (13) in eine Bezugsstellung, in der sich die Bezugsfläche (53) mit einem Bezugsanschlag (25) der Zeichenmaschine in Kontakt befindet;

Ermitteln der Bezugsstellung (Zr) des Schreibgeräts in der Erfassungsrichtung; und

Kombinieren der Identifizierungsstellung (Zi) und der Bezugsstellung (Zr), um daraus eine Angabe über den Schreibgerätetyp abzuleiten.

6. Verfahren nach Anspruch 5, dadurch gekennzeichnet, daß der Schritt des Bewegens des Geräts in die Bezugsstellung folgende Operationen umfaßt:

Verschieben des Schreibkopfes (11) in die andere der Richtungen, bis sich die Bezugsfläche (53) in der Erfassungsrichtung gegenüber dem Bezugsanschlag (25) befindet, und

Bewegen des Schreibgeräts (13) in die Erfassungsrichtung bis in die Bezugsstellung.

7. Verfahren nach Anspruch 5 oder 6, dadurch gekennzeichnet, daß ein Schritt vorgesehen ist, in dem das Schreibgerät (13) in die Erfassungsrichtung bewegt wird, um die Bezugsfläche (53) vom Bezugsanschlag (25) wegzubewegen, nachdem die Bezugsstellung (Zr) ermittelt wurde.

8. Verfahren nach einem der Ansprüche 5 bis 7, dadurch gekennzeichnet, daß der Identifizierungsanschlag (26) und der Bezugsanschlag (25) auf einem einzigen Teil (24) hergestellt sind.

9. Verfahren nach einem der Ansprüche 5 bis 8, dadurch gekennzeichnet, daß der Schritt des Kombinierens der Identifizierungsstellung und der Bezugsstellung aus einer Bestimmung der Differenz zwischen den beiden Stellungen (Zi-Zr) besteht.

10. Zeichenmaschine mit einem Schreibkopf (11), der ein Schreibgerät (13) trägt und der zumindest in eine erste Richtung (Y) beweglich auf einem Rahmen (10) angebracht is um auf einem Druckträger (15) vorbestimmte grafische Motive aufzuzeichnen, wobei das Schreibgerät (13) auf dem Schreibkopf (11) in eine Erfassungsrichtung zwischen einer beastandeten und einer anliegenden Stellung in bezug auf den Druckträger (15) und senkrecht zur ersten Richtung beweglich angebracht ist, ersten Betätigungaeinrichtungen (20) zur Verschiebung des Schreibkopfes (11) in der ersten Richtung (Y), und zweiten Betätigungseinrichtungen (41) zur Verschiebung des Schreibgerätes in bezug auf den Schreibkopf gemäß der zweiten Richtung (Z), dadurch gekennzeichnet, daß entweder die erste oder die zweite Richtung als Erfassungsrichtung gewählt wird, wobei das Schreibgerät (13) eine Identifizierungsfläche (52) aufweist, deren Plazierung in der Erfassungsrichtung als Funktion der Art des Schreibgeräts bestimmt ist, und daß die Zeichenmaschine weiters einen Identifizierungsanschlag (26), Einrichtungen (47,57) zur Steuerung der Betätigungaeinrichtungen (20,41), um das Schreibgerät (13) in eine Identifizierungsstellung (Zi) zu bewegen, in der sich die Identifizierungsfläche (52) mit dem Identifizierungsanschlag (26) in Kontakt befindet, und Einrichtungen (46) zur Ermittlung der Identifizierungsstellung (Zi) in der Ermittlungsrichtung, um daraus eine Angabe über den vom Kopf (11) getragenen Gerätetyp zu erhalten, aufweist.

11. Zeichenmaschine nach Anspruch 10, dadurch gekennzeichnet, daß die Erfassungsrichtung die zweite Richtung (Z) ist.

12. Zeichenmaschine nach Anspruch 10 oder 11, wobei das Schreibgerät (13) eine Bezugsfläche (53) aufweist, die sich in der Erfassungsrichtung an einer vom Schreibgerätetyp unabhängigen Stelle befindet, dadurch gekennzeichnet, daß ein Bezugsanschlag (25) vorgesehen ist, daß die Steuereinrichtungen (47,57) für die Steuerung der Betätigungseinrichtungen (20,41) ausgelegt sind, um das Schreibgerät (13) in eine Bezugsstellung (Zr) zu bewegen, in der sich die Bezugsfläche (53) mit dem Bezugsanschlag (25) in Kontakt befindet, daß die Erfassungseinrichtungen (46) die Bezugsstellung (Zr) erfassen können und daß Vergleichseinrichtungen vorgesehen sind, um die ermittelte Bezugsstellung (Zr) und die ermittelte Identifizierungsstellung (Zi) zu kombinieren und daraus eine Angabe über den Schreibgerätetyp abzuleiten.

13. Zeichenmaschine nach Anspruch 12, dadurch gekennzeichnet, daß der Bezugsanschlag (25) und der Identifizierungsanschlag (26) auf einem einzigen Teil (24) ausgebildet sind.

14. Zeichenmaschine nach Anspruch 12 oder 13, mit einem Speicherungsorgan (22), auf dem Reserve-Schreibgeräte entfernbar angeordnet sind, wobei der Schreibkopf (11) so ausgebildet ist, daß er ein Schreibgerät von Speicherorgan wegnehmen oder es darin ablegen kann, dadurch gekennzeichnet, daß der Bezugsanschlag (25) und der Identifizierungsanschlag (26) auf dem Speicherungsorgan (22) ausgebildet sind.

15. Zeichenmaschine nach einem der Ansprüche 12 bis 14, dadurch gekennzeichnet, daß die Stellung des Bezugsanschlags (25) in der zweiten Richtung (Z) so gewählt wird, daß sich die Bezugsstellung (Zr) im Bereich jener Stellung des Schreibgeräts befindet, die am weitesten vom Druckträger (15) entfernt ist.

16. Zeichenmaschine nach einem der Ansprüche 12 bis 15, dadurch gekennzeichnet, daß die Stellung des Identifizierungsanschlags (26) in der zweiten Richtung (Z) so gewählt ist, daß die mittlere der Identifizierungsstellungen für verschiedene Schreibgerätetypen im Bereich her Mitte zwischen der vom Druckträger (15) beabstandeten und der am Druckträger (15) anliegenden Stellung des Schreibgeräts (13) liegt.

**Claims**

1. Identification process for a writing tool in a graphics machine comprising a writing head (11) displaceable at least in a first direction (Y) parallel to a printing medium (15) to plot on the printing medium predetermined graphic patterns, the writing tool (13), carried by the writing head, being able in addition to be displaced along a second direction (Z) substantially perpendicular to the first in such a way as to distance itself from or to approach towards the printing medium, characterised in that :

one of the first and second directions being chosen as a detection direction, the writing tool (13) comprises an identification surface (52) situated along the detection direction at a position which is a function of the type of the writing tool and that it comprises the following steps :

leading the writing tool (13) up to an identification position for which the identification surface (52) is in contact with an identification abutment (26) of the graphics machine ; and

detecting the identification position (Zi) of the writing tool along the detection direction with the object of deducing from it an indication as to the type of tool carried by the head.

2. Process according to claim 1, characterised in that the detection direction is the second direction (Z).

3. Process according to claim 1 or 2, characterised in that the step consisting of leading the writing tool to the identification position comprises the following operations :

displacing the writing head (11) along the other of the said directions until the identification surface (52) is face-to-face along the detection direction with the identification abutment (26) ; and

displacing the writing tool (13) along the detection direction until the identification position.

4. Process according to one of claims 1 to 3, characterised in that it further comprises a step consisting of displacing the writing tool (13) along the detection direction to move the identification surface (52) from the identification abutment (26) after detection of the identification position (Zi).

5. Process according to one of claims 1 to 4, characterised in that the writing tool (13) comprises a reference surface (53) located, along the detection direction, at a fixed position undependent of the type of the writing tool and in that it comprises the following steps :

leading the writing tool (13) up to a reference position for which the reference surface (53) is in contact with a reference abutment (25) of the graphics machine ;

detecting the reference position (Zr) of the writing tool along the detection direction ; and

combining the identification position (Zi) and the reference position (Zr) to deduce from them an indication on the type of writing tool.

6. Process according to claim 5, characterised in that the step consisting of leading the tool to the reference position comprises the following operations :

displacing the writing head (11) along the other of the said directions up until the reference surface (53) comes face-to-face along the detection direction with the reference abutment (25) ; and

displacing the writing tool (13) along the detection direction up to the reference position.

7. Process according to one of claims 5 and 6, characterised in that it comprises a step consisting of displacing the writing tool (13) along the detection direction to move the reference surface (53) from the reference abutment (25) after detection of the reference position (Zr).

8. Process according to one of the claims 5 to 7, characterised in that the said identification abutment (26) and the said reference abutment (25) are formed on a single member.

9. Process according to one of the claims 5 to 8, characterised in that the step of combining the identification position and the reference position consists in determining the difference between the two positions $(Z_i - Z_r)$.

10. Graphics machine comprising a writing head (11) carrying a writing tool (13), the writing head being mounted on a framework (10) and movable along at least one first direction (Y) in such a fashion as to plot on a printing medium (15) predetermined graphic patterns ; the writing tool (13) being mounted on the writing head (11) and movable along a detection direction perpendicular to the first between a position distanced and a position closer with respect to the printing medium (15) ; first actuation means (20) to displace the writing head (11) in the first direction (Y) ; second actuation means (41) to displace the writing tool with respect to the writing head along the second direction (Z) ; characterised in that :

one of the first and second directions being chosen as detection direction, the writing tool (13) comprises an identification surface (52) situated along the detection direction at a position which is a function of the type of the writing tool ; and the graphics machine comprises :

an identification abutment (26) ;

means (47, 57) to control the actuation means (20, 41) with the object of leading the writing tool (13) into an identification position $(Z_i)$ for which the identification surface (52) is in contact with the identification abutment (26) ; and

means (46) for detecting the identification position $(Z_i)$ along the detection direction with the object of deducing from it an indication as to the type of writing tool carried by the head (11).

11. Graphics machine according to claim 10, characterised in that the detection direction is the second direction (Z).

12. Graphics machine according to claim 10 or 11, in which the writing tool (13) comprises a reference surface (53) located, in the detection direction, at a position independent of the type of writing tool ; characterised in that it comprises further a reference abutment (25) ; the control means (47, 57) are adapted to control the actuation means (20, 41) to feed the writing tool (13) into a reference position $(Z_r)$ for which the reference surface (53) is in contact with the reference abutment (25) ; the detection means (46) are adapted to detect the reference position $(Z_r)$ ; and comparison means are provided to combine the detected reference position $(Z_r)$ and identification position $(Z_i)$ to deduce from them an indication of the type of writing tool.

13. Graphics machine according to claim 12, characterised in that the reference abutment (25) and the identification abutment (26) are effected on a single piece (24).

14. Graphics machine according to claim 12 or 13, comprising a storage element (22) on which are located movable writing tools in reserve, the writing head (11) being adapted to take or deposit a writing tool on the storage element ; characterised in that the reference abutment (25) and the identification abutment (26) are made on the said storage element (22).

15. Graphics machine according to one of claims 12 to 14, characterised in that the positioning of the reference abutment (25) is chosen, along the second direction (Z), in such a fashion that the reference position $(Z_r)$ is near the furthest possible position of the writing tool from the printing medium (15).

16. Graphics machine according to one of claims 12 to 15, characterised in that the position of the identification abutment (26) is chosen along the second direction (Z) in such a fashion that the average of the identification positions for the different types of writing tools is near the centre between the most distant position and the closest position for the writing tool (13) with respect to the printing medium (15).

# FIG.1

EP 0 349 438 B1

# FIG.2

# FIG.3a

# FIG.3b